(19)

Europäisches
Patentamt
European
Patent Office
Office européen
des brevets

(11) **EP 1 769 875 A1**

(12) **EUROPEAN PATENT APPLICATION**

(43) Date of publication:
04.04.2007 Bulletin 2007/14

(51) Int Cl.:
**B23K 11/25** (2006.01)

(21) Application number: **05109145.2**

(22) Date of filing: **03.10.2005**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(71) Applicant: **ABB AB
721 83 Västeras (SE)**

(72) Inventors:
• **Kjellsson, Jimmy
723 44, Västerås (SE)**
• **Ingemansson, Joakim
460 20, Sjuntorp (SE)**

(74) Representative: **Reyier, Ann-Mari et al
Bjerkéns Patentbyra KB,
Box 128
721 05 Västeras (SE)**

(54) **Method and device for monitoring a spot welding process**

(57)   A method and device for supervising the welding quality in a spot welding process, comprising equipment (9) for measuring the welding current or voltage during a welding time, a data storage (11) for storing measurements of the welding current or voltage, and a calculation unit (12) adapted to calculate the pulse length (l) for a plurality of weld pulses based on said measurements and, to determine the weld quality based on variations of the length of the weld pulses during the welding time.

Fig. 3a

EP 1 769 875 A1

**(Cont. next page)**

EP 1 769 875 A1

Fig. 3b

**Description**

FIELD OF THE INVENTION

The present invention relates to a method and a device for supervising the welding quality in a spot-welding process.

PRIOR ART

During a spot welding process, the quality of the weld joint may vary due to various reasons. The quality depends on the strength of the weld nugget and the size of the weld nugget in view of the size of the welding electrode that is used, and the sheet to be welded. In many applications, a high quality of all weld joints is of the utmost importance.
From US-patent No. 6064029 a method and a device for supervising the welding quality in a spot-welding process is known. This method comprises measuring the weld current, performing a power factor calculation based on the measured weld current, and estimating the size and penetration of a weld nugget from a dynamic resistance curve by using a Hidden Markov Model method, wherein the dynamic resistance curve is obtained by the power factor calculation. The quality of the resistance spot weld is controlled by changing the welding current based on the size and penetration of the weld nugget. A drawback with this method is that it is a learning method, which means that it takes some time before it is possible to improve the quality of the weld joints. Another drawback with this method is that it does not provide an immediate feedback of the quality for each weld joint to the operator.

OBJECTS AND SUMMARY OF THE INVENTION

The object of the present invention is to provide an improved tool for supervising the quality of a spot welding process, which makes it possible to supervise the quality of each joint during the welding process.
According to one aspect of the invention this object is achieved by a method as defined in claim 1.
According to the invention, the method comprises: receiving measurements of the welding current, or voltage, during a welding time, calculating the pulse length, i.e. the duration of the pulse, for at least two weld pulses based on the measurements, and determining the weld quality based on variations of the length of the weld pulses during the welding time. The welding time is the time period during which a welding current is generated in order to provide a weld joint. The welding current includes a number of weld pulses, the lengths of which are calculated. Traditionally, a Medium Frequency Direct Current (MFDC) welding current includes about 100 - 500 weld pulses during a welding period. To achieve an accurate determination of the quality, the length is calculated for a plurality of weld pulses. Preferably, the number of weld pulses, for which the length is calculated, is more than 50.
The inventor has by empirical research revealed that the variation of the length the weld pulses during the welding time reflects the quality of the weld joint. Accordingly, a formula that reflects the correlation between the weld quality, and the variation of the length of the weld pulses during the welding time, has been set up. Thus, it is possible to determine the quality of the welding for each weld joint, during the welding process, based on the welding current during the welding time. Another advantages with the method according to the invention are that it easy to use, and it makes it possible adjust the welding parameters and thereby to save time and energy.
According to an embodiment of the invention, a parameter that reflects the welding quality is calculated based on that formula. If such a quality parameter is calculated as soon as the welding of a joint is finished, it possible to supervise the quality of each joint during the welding process.
According to an embodiment of the invention the calculation further comprises: calculating an arithmetical relationship between the pulse lengths for at least some of the weld pulses and, based thereon, calculating the parameter. In this embodiment an arithmetical relationship between the pulse lengths of the weld pulses during welding is used as a measure of the quality of the weld joint. Preferably, the arithmetical relationship is a quotient, but alternatively the arithmetical relationship may be a subtraction. A quotient is simple to use and makes it easy to compare values.
According to an embodiment of the invention the calculation comprises: calculating an arithmetical relationship between the pulse lengths for a plurality of weld pulses, and the pulse length for at least one pulse at the end of the welding time and, based thereon, calculating the parameter. Preferably, an average value is calculated for the pulse lengths of a plurality of weld pulses, and the average value is used for calculating the arithmetical relationship. With an average value is understood a value that is calculated by means of any type of statistical method for determining an average value, for example, the average value is an arithmetic mean value, or a median. It has been proven that the quality of a weld joint depends on the variation between the lengths of the pulses at the end of the welding time, and the lengths of the other weld pulses during the welding time.
According to an embodiment of the invention, an average value is calculated for the pulse length for at least the main part of the weld pulses and the arithmetical relationship is calculated based thereon. If most of the pulses during the welding time are used for calculation of the arithmetical relationship a better estimate of the quality is achieved, and thus the reliability of the supervision is improved.

According to an embodiment of the invention an average value for the pulse lengths of a plurality of weld pulses at the end of the welding time is calculated, and the arithmetical relationship is calculated based on the average value. For example, the average value is an arithmetic mean value or a median. By using an average value a better estimate of the pulse length is obtained, since the influence from noise in the measurements is reduced.

To use the pulse lengths for more that one pulse at the end of the welding time for the calculation of an end value for the welding time reduces the impact on the calculation due to noise and instability of the output from the welding timer. According to an embodiment of the invention, the current or voltage on the primary side of a transformer of a spot welding device is measured. It is easy to measure the current on the primary side of the transformer. However, it is also possible to measure the current, or voltage, on the secondary side, even though this is more troublesome. It is also possible to use the constant current regulation (KSR) coil of the weld timer to obtain the information of the shape of the current curve; this may be preferable if one wishes to integrate the invention into a weld-timer.

According to an embodiment of the invention the parameter is compared with a threshold value for an acceptable weld quality. If the parameter is below the threshold value (or above the threshold value, depending on the implementation), the operator of the spot welding device is notified, for example by the generation of an alarm. Thus, the operator is immediately informed of the fact that the quality of the welding is not satisfactory and it is possible for the operator to instantly take measures in order to improve the quality of the welding.

According to an embodiment of the invention, the method comprises detecting spatter based on variations of the length of the weld pulses during the welding time. A common phenomenon in connection with welding is the occurrence of spatter at the weld joints. Although the presence of spatter reduces the quality of the joint, the quality of the joint still has a reasonable quality regarding its strength. Therefore a separate indication of the presence of spatter in a joint is interesting for some welding applications. If there exists spatter in the joint, the weld curve shows an anomaly, such as sudden dip in the curve. Analyzing the curve will reveal such an anomaly and is an indication of spatter in the weld joint.

According to an embodiment of the invention the method comprises detecting spatter based on the parameter. Preferably, the parameter is compared with a second threshold value, used for indication of spatter. If the parameter is above (or below) the second threshold value, there may exist spatter at the weld joint. However, this comparison is only an indication about the fact that there may exist spatter at the joint. In order to detect spatter with a higher degree of certainty, the shape of a weld curve showing the pulse lengths for the weld pulses during the welding time is analyzed. If there exists spatter in the joint, the weld curve mostly shows an anomaly, such as sudden dip in the curve. Analyzing the curve will reveal such an anomaly. This embodiment of the invention offers a possibility to detect, with a high degree of probability, the presence of spatter at a joint, and to indicate the presence of spatter at the joint, for example to an operator.

According to an embodiment of the invention the method comprises: determining the variance of the pulse lengths during the welding time, comparing the variance with a stated minimum variance, and generating an alarm if the variance is lower than the minimum variance. If the variance in the pulse lengths during the welding time is too small, this is an indication that something is wrong with the welding. This embodiment attracts the operator's attention to the fact that something is wrong with the welding and thus further improves the supervision of the welding.

It is easy to realize that the method according to the invention, as defined in the appended set of method claims, is suitable for execution by a computer program having instructions corresponding to the steps in the inventive method when run on a processor unit.

According to a further aspect of the invention, the object is achieved by a computer program directly loadable into the internal memory of a computer or a processor, comprising software code portions for performing the steps of the method according to the appended set of method claims, when the program is run on a computer. The computer program is provided either on a computer-readable medium or through a network, such as the Internet.

According to another aspect of the invention, the object is achieved by a computer readable medium having a program recorded thereon, when the program is to make a computer perform the steps of the method according to the appended set of method claims, and the program is run on the computer.

According to another aspect of the invention this object is achieved by a device as defined in claim 17.

According to the invention the device comprises: equipment for measuring the welding current or voltage during a welding time, a data storage for storing measurements of the welding current or voltage, and a calculation unit adapted to calculate the pulse lengths for a plurality of weld pulses based on said measurements, and, based thereon, calculating a parameter which reflects the weld quality. The device according to the invention is cheap to manufacture, easy to connect to the spot-welding equipment, and no sensors are needed on the welding gun.

The features of the additional claims characterize further developments of the device.

The invention is, for example, useful for welding applications having a welding frequency between 50Hz and 50kHz. The invention is particularly useful in connection with Medium Frequency Direct Current (MFDC) welding that generally has a welding frequency of 1 kHz. However, the invention is also useful in connection with welding using a frequency above 10 kHz.

The term comprises/comprising when used in this specification is taken to specify the presence of stated features, integers, steps or components. However, the term does not preclude the presence or addition of one or more additional features, integers, steps or components or groups thereof.

BRIEF DESCRIPTION OF THE DRAWINGS

The invention will now be explained more closely by the description of different embodiments of the invention and with reference to the appended figures.

Fig. 1    shows a block diagram over spot-welding equipment and a device for supervising welding quality according to one embodiment of the invention.

Fig. 2    shows a diagram of the welding current during a welding cycle.

Fig. 3a    shows an example of a welding current graph, as Root Mean Square (RMS) values of the current, during a welding time.

Fig. 3b    shows in more detail some of the current pulses from a first part of the welding time shown in figure 3a.

Fig. 4    shows a diagram of the pulse width for all current pulses during a welding time.

Figs. 5-7    show flow diagrams of a method for supervising welding quality according to one embodiment of the invention.

DETAILED DESCRIPTION OF PREFERRED EMBODIMENTS OF THE INVENTION

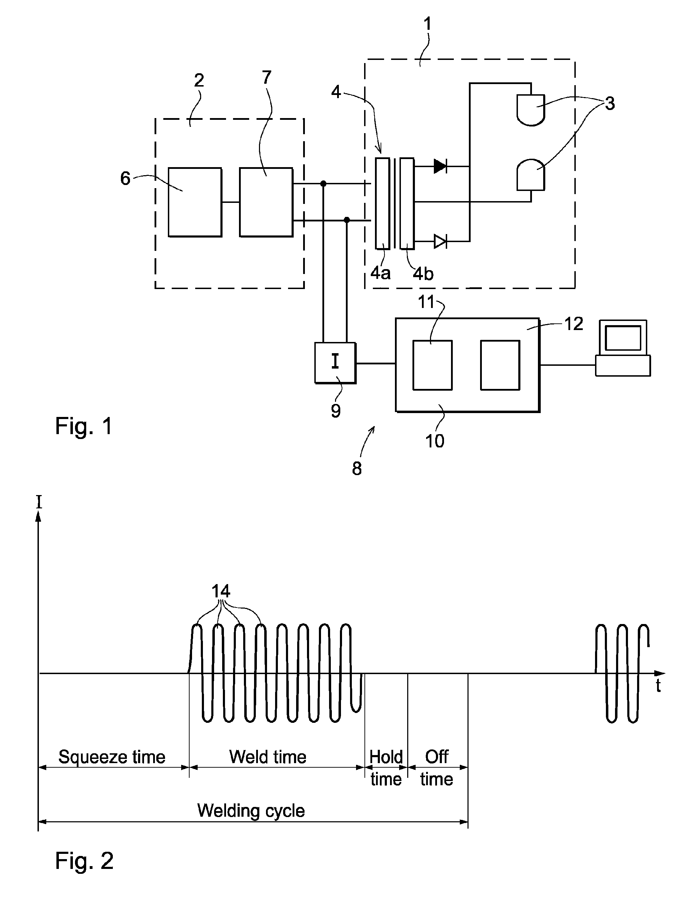

Figure 1 shows welding equipment comprising a spot welding gun 1 and a welding timer 2, which provides the weld gun 1 with welding current. The welding timer is provided with a constant current regulation (KSR), which is a prerequisite for the invention to work. The spot weld gun 1 comprises two electrodes 2, and a transformer 4 having a primary side 4a and a secondary side 4b. The secondary side 4b of the transformer is connected to the electrodes 3. The welding timer 2 comprises a control unit 6 for controlling the welding current and a power unit 7. The power unit 7 is connected to the primary side 4a of the welding gun.

Figure 1 further shows a device 8 for supervising the welding quality during the spot welding according to an embodiment of the invention. The device 8 comprises equipment 9 for measuring the welding current, processing means 10 for processing the measurements from the measuring equipment 9. The processing means 10 comprises data storage 11 for storing the measurements of the welding current and for storing the software necessary for performing supervision of the welding quality, and calculation unit 12 adapted to perform all calculations necessary for the supervision. The processing means 10 comprises input means for receiving measurements from the measuring equipment 9 and data processing means such as a processor unit. The processing means 10 may also include display means, such as a display screen.

The processing means is for example implemented on an FPGA, as an embedded system using a $\mu$-controller, a system on a chip, or as a computer such as a Personal Computer. The processing means 10 may be connected to an external unit, such as an external computer, a PLC, or a control system, for example, a robot controller. In such an embodiment, data from the processing means 10 is transferred to the external unit, for example, via a field bus or a discrete I/O, and the external unit further analyzes the data. If the processing means 10 is connected to an external unit, the result of the supervision may be displayed on the external unit, and thus the processing means 10 does not need to be provided with any display means. Alternatively, the processing means is implemented directly on an external unit, which is also used for other purposes, for example to control the welding. Then the hardware, such as memory and processors, of the external computer is used for the welding supervision.

The measuring equipment 9 is connected to the primary side 4a of the transformer in order to measure the output current from the welding timer. In this embodiment, the welding current is measured. However, in another embodiment it is possible to measure the welding voltage instead. In another embodiment it is also possible to measure the current or voltage on the secondary side of the transformer 4.

In order to measure the current waveform several techniques can be used. For example:

- using a Rogowski coil around the out- or ingoing conductors from the welding timer,
- using a current transformer with or without a magnetic core around the in- or outgoing conductor of the welding timer,
- using direct measurement on the in- or outgoing conductor of the welding timer, e.g. with a current shunt, or

- using a method based on the Hall Effect principle.

Any combination of the principles described above may be used.

Figure 2 shows a diagram of the welding current I during a welding cycle. The first part of the welding cycle is denoted the squeeze time and covers the time it takes for the electrodes to moved towards each other and to squeeze the pieces to be joined together. The second part of the welding cycle is denoted the welding time, and is the time during which the welding is executed. During the welding time the welding current is generated. As shown in figure 2, the welding current comprises a plurality of current pulses 14. The third part of the welding cycle is denoted the hold time and is the time when the electrodes keep holding the welded pieces together in order to allow the joint to cool. The fourth and last part of the welding cycle is denoted the off time, and covers the time when the electrodes are moved away from each other, and are moved to the next joint to be welded.

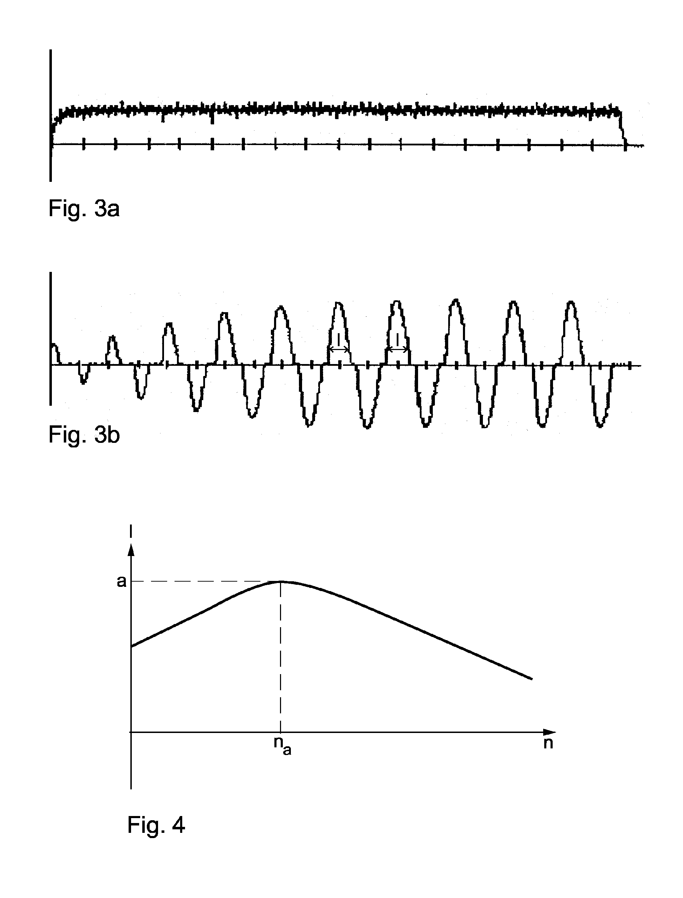

Figure 3a shows an example of a welding current during the entire welding time at a welding frequency of 1 kHz. The welding time typically last for 100-500 ms and the number of current pulses during that time is typically between 100 and 500. Figure 3b shows in more detail the current pulses during a first part of the welding time. According to the invention, the lengths I of the current pulses are measured. The pulse length is preferably calculated in μs. As shown in the figure, the lengths of positive current pulses are measured in this embodiment. However, due to symmetry the lengths of the negative current pulses could be measured as well.

Figure 4 shows a plot of the pulse length I for the current pulses n during the welding time. In the following, this plot is called a weld curve. As shown from the figure, the lengths I of the pulses are increasing at the beginning of the welding time and reach a maximum a at measurements $n_a$. In the following, this maximum a is denoted the apex of the weld curve. After the apex, the slope of the weld curve points downward. Thus, the pulse length decreases towards the end of the welding time.

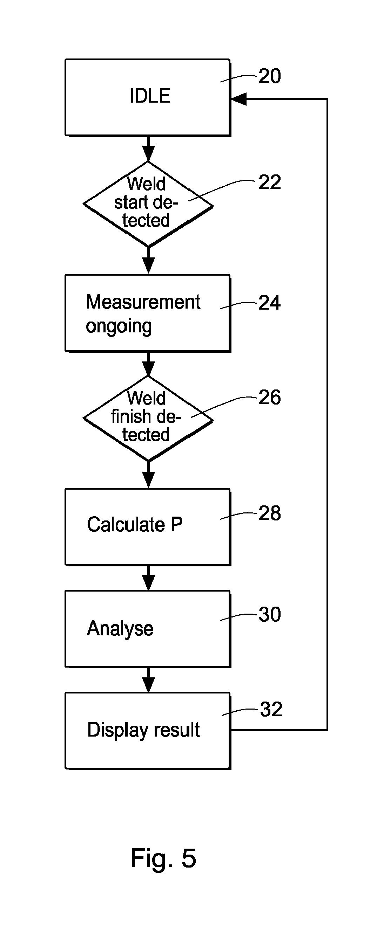

A method according to one embodiment of the invention will now be described in connection with flow charts shown in figures 5-7. It will be understood that each block of the flow charts can be implemented by computer program instructions.

The main flow of the method is disclosed in figure 5. To begin with the program is waiting for a weld start to be detected, block 20. The weld start is, for example, detected when the first current pulse is detected, block 22. When weld start has been detected measurements of the welding current are received continuously during the entire welding time until weld finish is detected, block 26. The measurements are stored in the data storage 11. Weld finish is, for example, detected when no current pulse has been received for a certain time period. When there are no more current pulses received after the waiting period of, for example 50 ms, the measuring is finished and the calculation can begin. The calculation phase should preferably be finished before the next welding cycle begins.

When all the measurements have been received, a parameter P, which reflects the weld quality, is calculated based on the stored measurements of the welding current, block 28. When the parameter P has been calculated, an analysis regarding the quality of the welding is carried out based on the parameter P and the measurements, block 30, which is explained below. The result of the analysis is displayed, block 32, for example on a display screen. However the result can be presented in other known ways, for example in an audible way. The result may also be transferred to an external unit for further analysis and for presentation on the external unit.

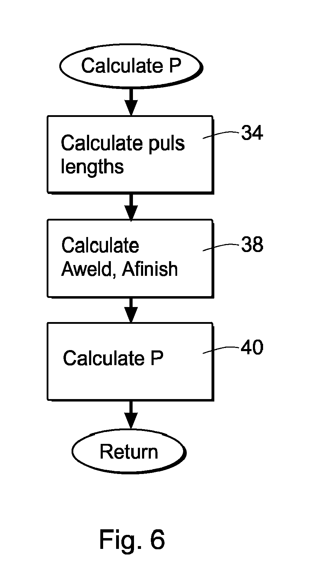

Figure 6 shows in more detail how the parameter P is calculated. At first the pulse lengths for the measured current pulses are calculated, block 34. The parameter P is calculated according to the following formula:

$$P = (Aweld/Afinish) + K \qquad (1)$$

where

$$Aweld = \sum_{n}^{L1} C(n)/(L1) \qquad (2)$$

$$Afinish = \sum_{m=L1-L2}^{L1} C(m)/(L2) \qquad (3)$$

K = a constant used to scale the value of the parameter P. For example, k = 100.
and where

L1 = the total number of pulses during the welding time.
L2 = the number of pulses to be used to represent the pulse length at the end of the welding time.
C(n) = the pulse length (in $\mu$s) for pulse number n.

Aweld is the average value of the pulse length during the welding time, and is calculated as the mean value for all current pulses generated during the welding time. Preferably, the entire weld curve should be used for calculating the average value of the pulse length in order to achieve a better result. Afinish is the average value of the pulse length during the end of the welding time, and is calculated as the mean value for a number of pulses at the end of the welding time, block 38. The number of pulses used for the calculation of Afinish is, for example, between 1 and 20, but preferably the number is between 2 and 10. It is possible to use only one value at the end of the welding time, but due to the noise in the measurement it is better to use more than one value and to calculate the average value based on the selected number of values.

When Aweld and Afinish have been calculated, the parameter P is calculated according to formula 1, block 40. P is a calculated value, which normally lies between 80 and 130. The constant 100 is added in order to stay in a positive range. This is the "raw" result of the algorithm and the threshold for an acceptable weld quality normally lies somewhere in the region of 100.

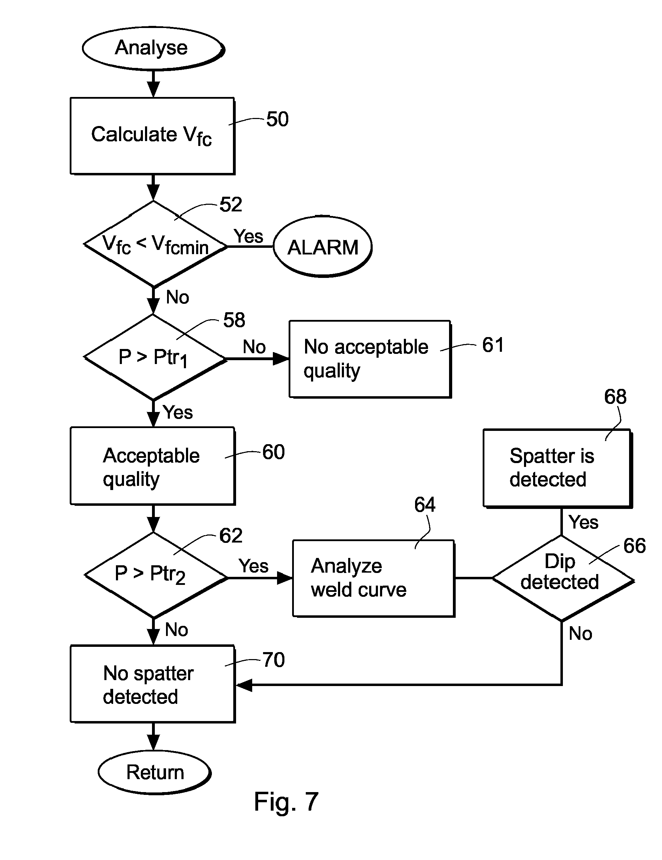

Figure 7 illustrates a flow diagram showing the steps in the analyses of the quality of the welding. There are two separate conditions that have to be checked in order for the result to be approved, regardless if the pre-value of the parameter P lies above the alarm threshold or not. One condition that has to be checked is the variance of the pulse length, i.e. the variance of the weld curve shown in figure 4. The variance Vfc for the pulse length is calculated based on the calculated pulse lengths, block 50. If the variance Vfc for the curve, or part of the curve, is smaller than a defined minimum variance Vfcmin, something is wrong with the welding and an alarm is generated, block 52. Vfcmin defines a minimum variation in $\mu$s that the weld curve must have.

Thereafter, the quality of the weld joint is decided based on the value calculated for the parameter P. The value of P is compared with a threshold value $Ptr_1$, block 58, and if the value of P is larger than the threshold value, the quality of the joint is acceptable, block 60. If the value of P below the threshold value Ptr1, the quality of the weld joint is not acceptable, block 61. The threshold value is, for example, 110. The lower value of the parameter P, the worse is the quality of the joint.

However, a high value of the parameter P does not necessarily mean a high quality of the joint. One problem in connection with spot welding is a phenomenon called spatter and a very high value of the parameter P is an indication of the existence of spatter at the weld joint. A joint having spatter is normally considered as acceptable in view of the strength of the joint. Nevertheless, it is sometimes of interest to know whether there exists spatter at a joint. Therefore, a second threshold value $Ptr_2$ is used in order to detect spatter. The value of P is compared with the threshold value, block 62. If the value of the parameter P is larger than $Ptr_2$ the joint may contain spatter and further analysis is necessary, block 64, otherwise no spatter is detected, block 70. The further analysis, block 64, includes detecting whether there exists a sudden dip at the weld curve, block 66. Such a dip in the weld curve is a clear indication of the existence of spatter at the joint. If a sudden dip at the weld curve is detected, spatter is detected, block 68, and the welding operator is informed accordingly. If the weld curve is smooth and no dip is detected, no spatter is detected at the joint, block 70. In another embodiment of the invention, spatter is detected only based on the detection of a sudden dip in the weld curve, without considering the value of the parameter.

A plurality of system parameters are provided, which for example are set by a user of a welding supervision system. The system parameters are used to tune the performance of the analysis of the welding quality. Correctly tuned, these system parameters will help to shape the behavior of the analysis in a desired manner. Each system parameter affects different aspects of the decision process on the welding quality.

This is a list of some useful system parameters:

MIN_CURVE_VAR_FULL: The value of this parameter states the minimum allowed variance for the weld curve.

NO_PULSES_FOR_AVG_END_RES: The value of this parameter states the number of pulses to be used for average calculation for the end value.

CURRENT_TRIGGERLEVEL: The value of this parameter states a current threshold where the measurement of the pulse width is started and stopped when measuring the current curve. A typical value for this system parameter is 40 A.

The following weld parameters are needed for calculation of the parameter P and for the analysis. The weld parameters are either directly measured on the current waveform or calculated using the current waveform.

FullCurveVariation: The measured variation (in $\mu$s) of the full weld curve. Used for detection if the curve variance is smaller than a stated value.

Full Length: The number of positive current pulses that the weld consisted of. This weld parameter is used in the average calculations. Due to symmetry, it is also possible to measure the pulse lengths for negative current pulses.

In an embodiment of the invention, only parts of the pulses are used for measuring the parameter P. In this embodiment the average value of the pulse length is calculated based on measurements from the last half of the weld curve. What is to be achieved is a comparison between the average value of the pulse length for the welding and an end value for the pulse length.

In the embodiment disclosed above, the average value of the pulse length for the welding is divided by an end value, i.e. the relation between the end value and the average value for the total number of pulses is achieved by means of a division. However, according to another embodiment of the invention a subtraction is used instead. For example, the parameter P is calculated by subtracting the end value from the average value for the entire welding time. The parameter P is then calculated according to the following formula:

$$P = Aweld - Afinish + K$$

An advantage with this embodiment is that no compensation is needed for differences in the resistance in secondary conducting circuits in different welding applications.

All of the method steps, as well as any sub-sequence of steps, described with reference to figures 5 -7 above may be controlled by means of a programmed computer apparatus. Moreover, although the embodiments of the invention described above with reference to the drawings comprise computer apparatus and processes performed in computer apparatus, the invention thus also extends to computer programs, particularly computer programs on or in a carrier, adapted for putting the invention into practice. The program may be in the form of source code, object code, a code intermediate source and object code such as in partially compiled form, or in any other form suitable for use in the implementation of the process according to the invention.

The carrier may be any entity or device capable of carrying out the program. For example, the carrier may comprise a storage medium, such as an ROM (Read Only Memory), for example a CD (Compact Disc) or a semiconductor ROM, or a magnetic recording medium, for example a floppy disc or hard disc. Further, the carrier may be a transmissible carrier such as an electrical or optical signal, which may be conveyed via electrical or optical cable or by radio or by other means. When the program is embodied in a signal, which may be conveyed directly by a cable or other device or means, the carrier may be constituted by such cable or device or means. Alternatively, the carrier may be an integrated circuit in which the program is embedded, the integrated circuit being adapted for performing, or for use in the performance of, the relevant processes

The present invention is not limited to the embodiments disclosed but may be varied and modified within the scope of the following claims. For example, it is possible to integrate the device according to the invention into the weld timer and directly use the generated control-data instead of actually measure the pulse width. It could also be possible to connect the system to a weld timer that supplies this data in some suitable format.

**Claims**

1. A method for supervising welding quality in a spot-welding process, wherein the method comprises:

   receiving information of the welding current, or voltage, during a welding time,
   calculating the pulse length for at least two weld pulses based on said information and,
   determining the weld quality based on variations of the length of the weld pulses during the welding time.

2. The method according to claim 1, wherein the method comprises calculating a parameter that reflects the weld quality based on said pulse length.

3. The method according to claim 2, wherein it comprises: calculating an arithmetical relationship between the pulse lengths for at least some of said weld pulses and, based thereon, calculating said parameter.

4. The method according to claim 2 or 3, wherein it comprises: calculating an arithmetical relationship between the pulse lengths for a plurality of said weld pulses, and the pulse length for at least one pulse at the end of the welding time and, based thereon, calculating said parameter.

5. The method according to claim 4, wherein it comprises: calculating an average value of the pulse length for at least the main part of the weld pulses and, based thereon, calculating said arithmetical relationship.

6. The method according to claim 4 or 5, wherein it comprises calculating an average value of the pulse lengths for a plurality of weld pulses at the end of the welding time and, based thereon, calculating said arithmetical relationship.

7. The method according to any of claims 3-6, wherein said arithmetical relationship is a quotient.

8. The method according to any of the previous claims, wherein said measuring comprises: measuring the output current on the primary side of a transformer (4) of a spot welding device.

9. The method according to any of claims 2 - 8, wherein said parameter is compared with a threshold value for an acceptable weld quality.

10. The method according to claim 9, wherein an alarm is generated based on the result of said comparison.

11. The method according to any of previous claims, wherein it comprises detecting spatter based on variations of the length of the weld pulses during the welding time.

12. The method according to any of claims 2-11, wherein it comprises detecting spatter based on said parameter.

13. The method according to claim 11 or 12, wherein it comprises analyzing the shape of a weld curve showing the pulse lengths versus the welding time, and based thereon, detecting spatter.

14. The method according to any of the previous claims, wherein it comprises: determining the variance of the pulse lengths during the welding time, comparing the variance with a stated minimum variance, and generating an alarm if the variance is lower than the minimum variance.

15. A computer program directly loadable into the internal memory of a computer, comprising software for performing the steps of any of claims 1-14.

16. A computer readable medium, having a program recorded thereon, where the program is to make a computer perform the steps of any of claims 1-14, when said program is run on the computer.

17. A device for supervising welding quality in a spot welding process, **<u>characterized in</u> that** the device comprises:

a data storage (11) for receiving and storing information of welding current or voltage during a welding time, and a calculation unit (12) adapted to calculate the pulse length (l) for at least two weld pulses based on said information and, to determine the weld quality based on variations of the length of the weld pulses during the welding time.

18. The device according to claim 17, wherein said calculation unit (12) is adapted to calculate a parameter that reflects the weld quality based on said calculated pulse lengths.

19. The device according to claim 18, wherein said calculation unit (12) is adapted to calculate an arithmetical relationship between the pulse lengths for at least some of said weld pulses and, based thereon, calculating said parameter.

20. The device according to claim 19, wherein said calculation unit (12) is adapted to calculate the relation between the pulse lengths for a plurality of said weld pulses, and the pulse length for at least one pulse at the end of the welding time and, based thereon, calculating said parameter.

21. The device according to claim 20, wherein said calculation unit (12) is adapted to calculate an average value of the pulse length for at least the main part of the weld pulses and, based thereon, calculating said arithmetical relationship.

22. The device according to claim 20 or 21, wherein said calculation unit is adapted to calculate an average value of the pulse lengths for a plurality of weld pulses at the end of the welding time and, based thereon, calculating said arithmetical relationship.

23. The device according to any of claims 16-22, wherein said arithmetical relationship is a quotient.

24. The device according to any of claims 16-22, wherein said arithmetical relationship is a difference.

25. The device according to any of claims 16 - 24, wherein the device comprises equipment (9) for measuring the welding current or voltage during a welding time, and said measuring equipment (12) is adapted to measure the output current on the primary side of a welding timer of a spot welding device.

26. The device according to any of claims 16-25, wherein said calculation unit (12) is adapted to compare said parameter with a threshold value for an acceptable weld quality and to generate an alarm based thereon.

27. The device according to any of claims 16-26, wherein said calculation unit (12) is adapted to compare said parameter with a second threshold value in order to detect spatter.

28. The device according to any of claims 16-26, wherein said calculation unit (12) is adapted to detecting spatter based on variations of the length of the weld pulses during the welding time.

29. The device according to claim 27 or 28, wherein said calculation unit (12) is adapted to analyze the shape of a weld curve that shows the pulse lengths versus the welding time, and to detect spatter based on the result from said analyzing of the shape of the weld curve.

30. The device according to any of claims 16-29, wherein said calculation unit (12) is adapted to determine the variance of the pulse lengths during the welding time, to compare the variance with a stated minimum variance, and to generate an alarm if the variance is lower than the minimum variance.

31. Use of the device according to any of the claims 16-30 for a spot welding process having a welding frequency between 50Hz and 50kHz.

Fig. 1

Fig. 2

Fig. 3a

Fig. 3b

Fig. 4

IDLE — 20

Weld start de-tected — 22

Measurement ongoing — 24

Weld finish de-tected — 26

Calculate P — 28

Analyse — 30

Display result — 32

Fig. 5

Fig. 6

Fig. 7

**European Patent Office**

**EUROPEAN SEARCH REPORT**

Application Number

EP 05 10 9145

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | US 6 064 029 A (CHOI ET AL) 16 May 2000 (2000-05-16) * abstract * ----- | 1-31 | INV. B23K11/25 |
| A | EP 0 835 713 A (MIYACHI TECHNOS CORPORATION) 15 April 1998 (1998-04-15) * abstract * ----- | 1-31 | |
| A | DE 101 51 141 A1 (ESSOR INTERNATIONAL INC., TAICHUNG) 13 June 2002 (2002-06-13) * abstract; figure 4 * ----- | 1-31 | |
| | | | **TECHNICAL FIELDS SEARCHED (IPC)** B23K |

The present search report has been drawn up for all claims

| Place of search | Date of completion of the search | Examiner |
|---|---|---|
| The Hague | 21 April 2006 | Jaeger, H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT**
**ON EUROPEAN PATENT APPLICATION NO.**                    EP 05 10 9145

This annex lists the patent family members relating to the patent documents cited in  the above-mentioned European search report.
The members are as contained in the European Patent Office EDP file on
The European Patent Office is in no way  liable for these particulars which are merely  given for the purpose of information.

21-04-2006

| Patent document cited in search report | | Publication date | Patent family member(s) | | Publication date |
|---|---|---|---|---|---|
| US 6064029 | A | 16-05-2000 | JP | 3022488 B2 | 21-03-2000 |
| | | | JP | 11077327 A | 23-03-1999 |
| EP 0835713 | A | 15-04-1998 | CN | 1180599 A | 06-05-1998 |
| | | | US | 6011235 A | 04-01-2000 |
| DE 10151141 | A1 | 13-06-2002 | TW | 471987 B | 11-01-2002 |

EPO FORM P0459

For more details about this annex : see Official Journal of the European Patent Office, No. 12/82

**EP 1 769 875 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6064029 A